Europäisches Patentamt

European Patent Office

Office européen des brevets

(11) Numéro de publication : **0 239 592 B1**

(12) **FASCICULE DE BREVET EUROPEEN**

(51) Int. Cl.⁵ : **B62D 13/06, B62D 15/00**

(45) Date de publication du fascicule du brevet :
**06.03.91 Bulletin 91/10**

(21) Numéro de dépôt : **86905703.4**

(22) Date de dépôt : **29.09.86**

(86) Numéro de dépôt international :
**PCT/CH86/00136**

(87) Numéro de publication internationale :
**WO 87/01999 09.04.87 Gazette 87/08**

(54) **DISPOSITIF D'ASSERVISSEMENT DE LA DIRECTION D'UN VEHICULE ARTICULE.**

(30) Priorité : **30.09.85 FR 8514573**

(43) Date de publication de la demande :
**07.10.87 Bulletin 87/41**

(45) Mention de la délivrance du brevet :
**06.03.91 Bulletin 91/10**

(84) Etats contractants désignés :
**AT BE CH DE FR GB IT LI LU NL SE**

(56) Documents cités :
**WO-A-85/03263**
**BE-A- 400 388**
**FR-A- 734 241**
**GB-A- 2 014 921**

(73) Titulaire : **GEORG FISCHER
AKTIENGESELLSCHAFT
Mühlentalstrasse 105
CH-8201 Schaffhausen (CH)**
Titulaire : **KUNZE, Christian
Chemin du Suchet 3
CH-1373 Chavornay (CH)**

(72) Inventeur : **Martinet, Simon
Fleurettes 11
CH-1373 Chavornay (CH)**
Inventeur : **Kunze, Christian
Chemin du Suchet 3
CH-1373 Chavornay (CH)**

(74) Mandataire : **Sparing Röhl Henseler
Patentanwälte European Patent Attorneys
Rethelstrasse 123
W-4000 Düsseldorf 1 (DE)**

EP 0 239 592 B1

Jouve, 18, rue Saint-Denis, 75001 PARIS

## Description

La présente invention concerne un dispositif d'asservissement de la direction d'un véhicule articulé comportant un véhicule tracteur et une remorque à roues à essieux fixes ou articulés, et un organe de commande pour donner une consigne de direction à ce dispositif, ce dispositif comportant un premier détecteur pour détecter la position des roues directrices du tracteur, un second détecteur pour détecter la position d'une sellette de la remorque et éventuellement un troisième détecteur pour détecter la position entre un timon de la remorque et l'axe du tracteur, et comportant un circuit électronique pour fournir au dispositif d'asservissement un signal de commande à la direction des roues avant du tracteur en fonction des informations fournies par les détecteurs et de la consigne de direction donnée par l'organe de commande.

Un dispositif de ce type est connu de WO 85/03263, qui décrits les différents moyens d'asservissement agissant sur la commande de la direction pour faciliter principalement les manoeuvres en marche arrière de véhicules articulés du type semi-remorque ou camion tractant une remorque. Un des buts recherchés lors de la manoeuvre de ce type de véhicules est le positionnement précis de la remorque par rapport à un obstacle fixe tel que par exemple l'angle d'une rue, la porte d'un hangar, ou le bord d'une rampe de chargement. Par ces systèmes connus l'objectif fixé est le positionnement précis du train routier, comprenent à la fois la remorque et le tracteur, sur une trajectoire considérée commme idéale.

Il est le but de la présente invention de proposer un dispositif d'asservissement qui permet de positionner la remorque, sur une distance de manoeuvre aussi courte que possible, quelle que soit la position finale du tracteur, en respectant toutefois les conditions limites, c'est-à-dire en interdisant des positions angulaires notamment du timon, qui pourraient provoquer des défauts soit au timon, soit à la carrosserie du tracteur ou de la remorque.

Le dispositif selon l'invention est caractérisé en ce que le circuit électronique comporte un calculateur numérique pour le traitement des informations fournies par tous les détecteurs présents qui comporte un quatrième détecteur pour détecter une mesure d'angle entre l'organe de commande et l'axe du tracteur, le traitement des informations par le calculateur numérique étant procédé suivant l'équation de régulation

$$D = K_3G + K_2C - K_1S,$$

D étant une mesure d'angle entre les roues directrices et l'axe du tracteur, G étant une mesure d'angle entre l'organe de commande et l'axe du tracteur, C étant une mesure d'angle entre le timon du remorque et l'axe du tracteur et S étant une mesure d'angle entre l'axe et la sellette de la remorque, en ajustant les coefficient $K_1$, $K_2$ et $K_3$ de telle manière que la direction donnée par l'organe de commande ne dépasse jamais la limite de braquage maximale.

Dans le cas où les détecteurs sont des capteurs analogiques, le circuit électronique comporte avantageusement un multiplexeur dont chacune des entrées est raccordée à un détecteur et un convertisseur analogique/numérique couplé entre ce multiplexeur et le calculateur numérique.

Dans le cas où les détecteurs sont des capteurs numériques, le circuit électronique comporte avantageusement un multiplexeur dont chacune des entrées est raccordée à un détecteur et dont la sortie est directement couplée au calculateur numérique.

Selon une forme de réalisaticn avantageuse, le dispositif comporte des organes avertisseurs montés dans la cabine du conducteur, ces organes étant liés aux détecteurs pour signaler au conducteur que le véhicule atteint les limites de braquage.

Pour commmander les roues directrices du véhicule tracteur, le dispositif peut également comporter un dispositif moteur à grand couple de démarrage.

Pour faciliter les manoeuvres, le dispositif peut comporter des moyens de visualisation de la remorque et/ou du véhicule tracteur, montés sur le tableau de bord du véhicule tracteur.

Selon une autre forme de réalisation, le dispositif peut comporter deux séries de voyants lumineux montés respectivement sur le bord droit et le bord gauche d'au moins un rétroviseur du véhicule tracteur, ces voyants étant agencés pour fournir au conducteur une indication sur le sens dans lequel il doit tourner le volant de la direction du véhicule tracteur pour effectuer correctement la manoeuvre, ainsi que l'amplitude de la rotation de ce volant.

Pour des raisons de sécurité, le dispositif peut comporter des butées mécaniques de sécurité associées à des contacteurs agencés pour fournir au calculateur des informations relatives aux angles de braquage maximal.

Il peut également comporter des moyens électroniques agencés pour fournir au calculateur des informations relatives aux angles de braquage maximal.

Selon une forme de réalisation particulièrement avantageuse, le dispositif comporte une unité de commande agencée pour agir sur la transmission et les freins du véhicule et montée dans un poste de pilotage disposé à l'arrière de ce véhicule.

Pour permettre la commande de manoeuvres de l'extérieur, il comporte de préférence un équipement de commande à distance portable.

Selon une autre forme de réalisation préférée, la remorque et/ou le véhicule tracteur est équipé de moyens de codage des caractéristiques dimensionnelles de la remorque, ces moyens étant agencés pour transmettre au calculateur numérique des informations de programmation correspondant à ces caractéristiques dimenionnelles.

Ces moyens comportent de préférence un connecteur mâle et un connecteur femelle respectivement montés sur la remorque et le véhicule tracteur, le connecteur de la remorque étant codé et le connecteur du véhicule tracteur étant agencé pour transmettre lesdites informations de programmation au calculateur. Ils peuvent comporter une carte codée selon les caractéritiques dimensionnelles de la remorque et un lecteur de carte codée pour transmettre lesdites informations de programmation au calculateur.

De façon avantageuse, le dispositif comporte un moyen mécanique escamotable comprenant un moteur électrique et au moins une tige de transmission liée à un arbre flexible portant un manchon de couplage agencé pour coopérer avec une pièce de liaison femelle solidaire du volant pour entraîner ce volant pendant les opérations de manoeuvre commandées par l'organe de commande destiné à donner une consigne de direction.

La présente invention sera mieux comprise en référence à la description d'exemples de réalisation et au dessin annexé dans lequel :

La figure 1 représente une vue schématique d'un véhicule articulé du type camion-remorque,

La figure 2 représente schématiquement un véhicule du type semi-remorque,

La figure 3 représente un schéma-bloc illustrant une première forme de réalisation du circuit électronique du dispositif selon l'invention,

La figure 4 représente un schéma-bloc illustrant une autre forme de réalisaticn du circuit électronique du dispositif selon l'invention,

La figure 5 représente une forme de réalisation d'un rétroviseur à indicateurs lumineux monté à l'extérieur de la cabine du conducteur,

La figure 6 représente les connecteurs de codage des remorques, et

La figure 7 représente schématiquement un moyen d'entrainement du volant du véhicule tracteur.

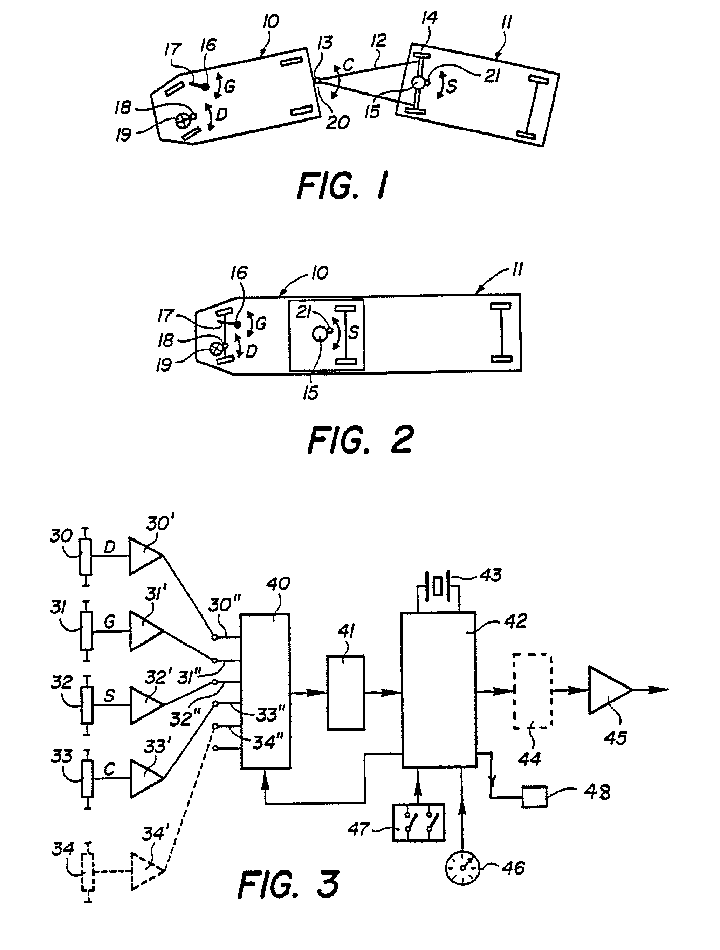

En référence à la fig. 1, le dispositif de l'invention est monté sur un véhicule articulé du type camion 10 tractant une remorque 11. La remorque 11 est attelée au camion 10 par un timon 12 portant un crochet d'attelage 13. La remorque comporte en outre un essieu avant 14 articulé sur une sellette 15. Pour fournir à un circuit électronique les informations requises pour qu'il puisse commander le dispositif d'asservissement, le camion comporte un premier détecteur 16 associé à l'organe de commande 17 appelé par la suite godille, agencé pour donner au circuit une consigne de direction. Un second détecteur 18 est associé à la direction 19. Le détecteur 16 fournit une mesure d'angle désignée par G. Le détecteur 18 fournit une mesure d'angle désignée par D. Le crochet d'attelage 13 porte un détecteur 20 qui fournit une mesure d'angle désignée par C. La sellette 15 est associée à un détecteur 21 qui fournit une mesure d'angle désignée par S. Les angles sont mesurés en valeur absolue. Chaque détecteur comporte un point zéro qui correpond à une valeur réelle de l'angle correpondant. Ces détecteurs peuvent être constitués par des capteurs analogiques du type potentiométrique, capacitif, inductif, magnétique etc ... ou des capteurs numériques du type disque à fentes connu en soi. Ils sont conçus pour fournir une mesure d'angle absolue qui constitue l'information de base destinée à être traitée par le circuit électronique.

L'algorithme de travail est déterminé de telle manière qu'à tout moment on tende à annuler les erreurs sur les angles C et S, c'est-à-dire d'angles du crochet et de la sellette par rapport à une trajectoire idéale. Cette trajectoire idéale peut être définie comme étant la trajectoire que suivrait le même véhicule s'il circulait en marche avant. Cette trajectoire est soit linéaire, lorsque l'angle D est nul, soit circulaire lorsque cet angle à une valeur différente de zéro.

L'équation de régulation est la suivante :

$$K_1(G - S) + K_2(G - C) - G = D$$

si

$$K_3 = K_1 + K_2 - 1$$

on obtient

$$D = K_3G + K_2C - K_1S$$

Les coefficients $K_1$, $K_2$ et $K_3$ sont appelés les gains. Dans la pratique, on s'arrange pour faire varier ces gains selon des lois de réglage, de telle manière qu'en cours de fonctionnement la direction ne dépasse jamais la limite de braquage maximale. En travaillant en boucle d'asservissement fermée, on contrôle en permanence les valeurs des angles et on ajuste les gains pour que ces valeurs n'atteignent jamais la saturation. L'équation de régulation mentionnée ci-dessus s'applique valablement à de petites variations de l'angle G qui définit la consigne de direction. Pour des sauts relativement importants de l'angle G, l'angle C risquerait d'atteindre des valeurs critiques. Pour éviter ce risque, on fait varier les gains de façon appropriée. La loi de sélection des gains est telle que le déplacement du véhicule à proximité de la trajectoire idéale s'effectue dans le minimum de temps. Dans la pratique, ce temps est minimal lorsque la trajectoire effective suivie par le véhicule est la plus proche de la trajectoire idéale. Plus les fluctuations de part et d'autre de cette trajectoire idéale sont grandes, plus le véhicule mettra de temps pour atteindre son objectif.

La formule ci-dessous illustre un cas particulier de sélection de gains $K_4$ et $K_5$ et définit la loi qui s'applique lorsque l'angle du crochet C s'approche de sa valeur limite.

$$D = K_4(C - Cmax) + K_5G$$

Dans ce cas $K_1 = 0$, ce qui revient à limiter le mouvement de la sellette lorsque l'angle du crochet s'approche de sa valeur maximale.

La fig. 2 illustre un véhicule semi-remorque comportant, comme précédemment, un tracteur 10 auquel est attelée une remorque 11. Comme précédemment le tracteur est équipé d'une godille 17 associée à un détecteur 16 définissant l'angle de consigne de direction G et une direction 19 associée à un détecteur 18 définissant l'angle D des roues directrices du tracteur 10. Une sellette 15 associée à un détecteur 21 définit l'angle S de la sellette. Dans ce cas l'angle C est nul compte tenu de l'absence d'un timon et du crochet correpondant. Il en résulte que l'équation définissant la valeur angulaire D de la direction s'en trouve simplifiée.

Le système pourrait être généralisé sous la forme d'une application à des véhicules comportant par exemple un tracteur et deux remorques ou un semi-remorque auquel est attelée une remorque supplémentaire. Dans ce cas, il convient d'introduire au moins un paramètre complémentaire défini par l'angle de l'élément articulé de la remorque supplémentaire.

La mesure absolue des angles par rapport à la route est nécessaire pour éviter une dérive globale du véhicule lors d'une marche arrière en ligne droite. En effet, dans certains systèmes connus, le dispositif tendait à aligner le tracteur sur l'axe de la remorque. De ce fait, si la remorque avait initialement une position en travers par rapport à la route, et si le conducteur donnait à son véhicule, par l'intermédiaire de la consigne, l'ordre de reculer en ligne droite, l'ensemble du train routier se mettait en travers. Pour éviter cet inconvénient, le chauffeur peut, soit faire avancer le véhicule en ligne droite de manière à amener l'axe de la remorque dans la direction souhaitée, soit faire dévier le tracteur en marche arrière de manière à faire dévier également la remorque. Le dispositif électronique est conçu pour mesurer cette dérive, sa durée et pour la compenser dans l'autre sens de telle manière que la trajectoire moyenne du véhicule soit rectiligne.

La figure 3 est un schéma-bloc illustrant une forme de réalisation du circuit électronique du dispositif décrit ci-dessus. Un premier détecteur analogique 30 lié à la direction du tracteur fournit une information correspondant à l'angle D à un amplificateur de réglage 30′ dont la sortie est liée à une entrée 30″ d'un multiplexeur 40. Un second détecteur analogique 31 fournit une information correspondant à l'angle G de la godille à un amplificateur de réglage 31′ dont la sortie est connectée à une entrée 31″ du multiplexeur 40. Un troisième détecteur analogique 32 transmet un signal correpondant à l'angle de la sellette S à un amplificateur de réglage 32′ dont la sortie est connectée à une entrée 32″ du multiplexeur 40 et un quatrième détecteur analogique 33 transmet un signal correspondant à l'angle C du crochet à un amplificateur de réglage 33′ dont la sortie est connectée à une entrée 33″ du multiplexeur 40.

Ce circuit électronique correspond au cas du camion tractant une remorque représenté par la fig. 1. Dans le cas d'une extension à un camion tractant deux remorques, un cinquième détecteur 34 représenté en traits interrompus peut être prévu. Dans ce cas, un cinquième amplificateur de réglage 34′ est associé à ce détecteur et sa sortie est connectée à une entrée complémentaire 34″ du multiplexeur 40. Dans le cas du véhicule semi-remorque illustré par la fig. 2, le détecteur 33 correspondant au crochet est supprimé.

La sortie du multiplexeur 40 est connectée à l'entrée d'un convertisseur analogique/numérique 41 qui permet de transformer les signaux des détecteurs analogiques en signaux numériques transmis à un calculateur analogique 42 alimenté en tension par une source d'énergie 43. La sortie du calculateur 42 peut être reliée à un convertisseur numérique/analogique 44 (représenté en traits interrompus) dont le signal de sortie préalablement amplifié par un amplificateur 45 est dirigé vers un dispositif d'asservissement qui peut être un système électrohydraulique ou un moteur électrique. La commande, au lieu d'être proportionnelle, peut être faite directement. Dans ce cas, le convertisseur 44 peut être supprimé. Un sélecteur 46 est relié au calculateur 42 pour fournir à ce dernier une information sur le type de véhicule, l'empattement etc...

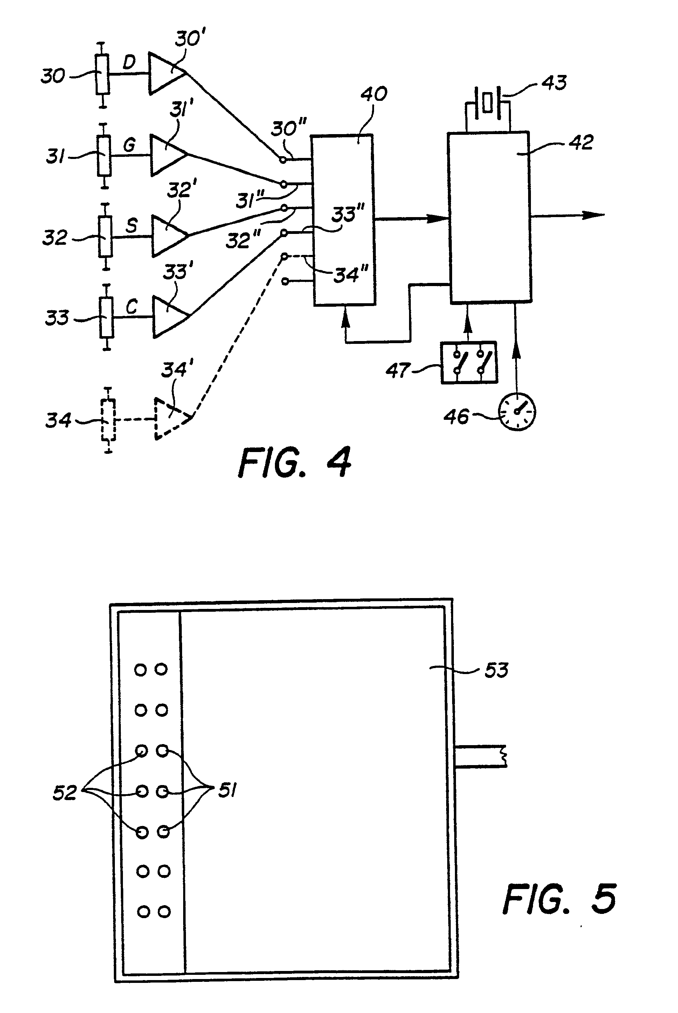

Le sélecteur 46 représenté par les figures 3 et 4 est de préférence placé à l'intérieur du véhicule tracteur. Il peut être constitué par un boutoir contacteur à plusieurs positions correspondant chacune à une remorque particulière. Ce sélecteur peut également être remplacé par un clavier sur lequel le conducteur entre le type de la remorque.

Une autre technique consiste à prévoir une carte magnétique pour chaque type de remorque et d'introduire dans un lecteur approprié la carte de codage dont les données sont transmises au calculateur.

Des contacteurs 47 liés à des butées mécaniques sont conçus pour fournir au calculateur 42 des informations concernant des angles de braquage maximal. Les butées mécaniques peuvent être remplacées par tout système ayant le même objectif, par exemple un dipositif électronique.

Un dispositif avertisseur 48 est associé au calculateur analogique pour informer le conducteur le cas échéant que les angles de braquage maximal sont atteints ou que les valeurs réelles de ces angles s'approchent des valeurs limites considérées comme dangereuses.

Le sélecteur 46 est utile pour programmer le calculateur en fonction des caractéristiques de la remorque, à savoir sa longueur, son empattement, des données relatives au timon, l'angle de braquage maximal, etc... Il est bien évident qu'une telle programmation nécessite une intervention de la part du conducteur, et éventuellement une formation préliminaire lui permettant d'effectuer une telle programmation sans erreur.

Pour éviter une telle intervention, on peut également prévoir des moyens de programmation automatique qui s'effectuent au moyen d'un codage approprié de la remorque et par un système de connexion électrique de la remorque au camion.

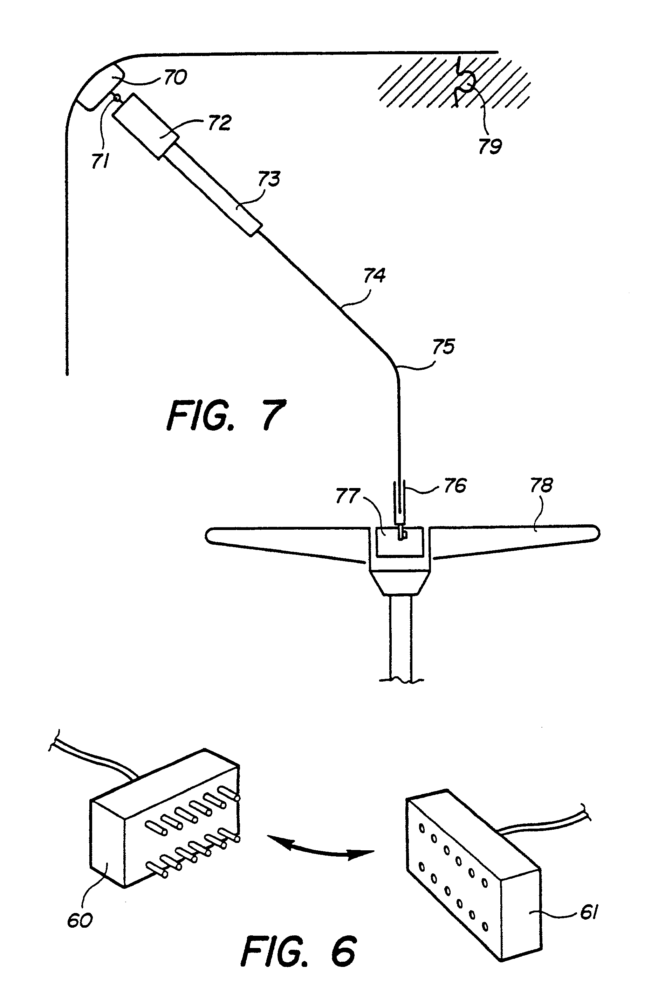

Deux méthodes différentes peuvent être utilisées à cet effet. Une première méthode révoit le codage de la remorque au moyen de deux paramètres qui sont : A la longueur du timon, c'est-à-dire la distance entre le crochet et l'essieu et B son empattement. La valeur de ces deux grandeurs est définie par des codes par exemple des codes binaires. A titre d'exemple comme le montre la figure 6, chaque code est à six positions, ce qui permet de coder soixante-quatre remorques différentes. Le véhicule tracteur est par exemple équipé d'un connecteur mâle 60 et la remorque est équipée d'un connecteur femelle 61. En codage binaire, certains contacts du connecteur femelle de la remorque sont connectés à la masse alors que certains autres contacts sont raccordés à une source de tension. Le couplage des deux connecteurs assure l'identification de la remorque.

Selon une seconde méthode, la valeur chiffrée en une unité de longueur choisie, par exemple le centimètre, est directement codée au moyen des deux connecteurs mâle et femelle. Dans ce cas, le nombre de contacts accouplés au moyen des deux connecteurs définit directement les longueurs A et B. La longueur écrite en langage binaire est directement acheminée vers le calculateur qui en tire les paramètres de règlage.

Il est bien évident que tout autre code binaire tel que le "Gray" etc... pourrait être utilisé pour coder les remorques.

Le circuit électronique représenté par la fig. 4 diffère de celui de la fig. 3 par l'absence du convertisseur analogique/numérique 41 et celle du convertisseur numérique/analogique 44. Ceci est dû au fait que, dans ce cas, les détecteurs 30, 31, 32, 33 et 34 sont constitués par des capteurs numériques. Le dispositif d'asservissement hydraulique est conçu pour répondre à des informations numériques.

Pour assurer un maximum de sécurité de fonctionnement au sytème, la cabine du conducteur peut être équipée de disposltifs d'alarme se présentant sous la forme de voyant lumineux, de signaux sonores ou d'une combinaison de ces deux moyens qui émettent des signaux lorsque le véhicule s'approche ou atteint les limites de braquage lesquelles, lorsqu'elles sont atteintes, provoquent un pliage ou une cassure des éléments mécaniques d'accouplement.

Un autre accessoire intéressant peut être prévu pour faciliter au conducteur le contrôle des manoeuvres effectuées. Il s'agit d'un dispositif de visualisation de la remorque et/ou du véhicule tracteur prévu sur le tableau de bord. Un tel dispositif peut être particulièrement utile lorsque la remorque est plus étroite que le tracteur de sorte que son repérage est particulièrement difficile depuis le poste de pilotage. C'est le cas notamment de remorques portant des pompes à incendie etc...

Pour fournir au conducteur une information complète en images de l'environnement dans lequel s'effectue la manoeuvre, le véhicule peut être équipé d'une caméra vidéo, montée à l'arrière du train routier, et d'un récepteur de contrôle disposé à l'intérieur de la cabine du véhicule tracteur. Un tel dispositif peut être particulièrement utile pour effectuer des manoeuvres en marche arrière dans des endroits exigus.

Comme mentionné précédemment, le dispositif d'assitance peut être du type hydraulique, mécanique ou électrique. Dans ce dernier cas, il convient de disposer d'un dispositif électromécanique ayant un important couple de démarrage.

Un autre dispositif, illustré par la fig. 5, peut être particulièrement utile pour assister le conducteur au cours des manoeuvres. Il s'agit de lampes indicatrices de direction ou de voyants lumineux de préférence montés à proximité ou sur au moins un rétroviseur du véhicule tracteur. Deux séries de voyants lumineux 51 et 52 de couleurs différent à allumage progressif ou d'intensité lumineuse variable peuvent être montées, soit le long du bord droit, soit le long du bord gauche d'un rétroviseur 53 pour signaler au conducteur dans quel sens il doit tourner le volant du véhicule et l'amplitude de la rotation de ce volant pour que la manoeuvre s'effectue correctement. Il est bien entendu que les voyants lumineux doivent être disposés à proximité immédiate du ou des rétroviseurs pour que le conducteur puisse voir simultanément l'image transmise par le miroir et lesdits voyants. A titre d'exemple, les voyants 51 peuvent être verts et indiquent au chauffeur qu'il doit tourner le volant à droite. Les voyants 52 peuvent être rouges et signalent au chauffeur qu'il doit tourner le volant dans l'autre sens. Ceci permet de réaliser un dispositif semi-automatique dans lequel la commande automatique du dispositif d'assistance peut être supprimée. Bien que moins précis et moins efficace, un tel dispositif pourrait présenter un intérêt économique en raison de son coût réduit.

La figure 7 illustre un moyen mécanique de commande du volant du véhicule tracteur lors des manoeuvres de marche arrière. La commande de la manoeuvre s'effectue au moyen d'un organe de commande 16 représenté par les figure 1 et 2, et la transmission au volant du véhicule s'effectue au moyen d'une transmission appropriée couplée au centre du volant. Cette transmission se compose d'un support 70 fixé par exemple dans un angle supérieur de la cabine du tracteur ou du camion, d'une articulation 71 qui couple ce support à un moteur ou un motoréducteur 72 dont l'arbre de sortie 73 est accouplé à une tige rectiligne 74 raccordée par un arbre flexible à un manchon de couplage 75 agencé pour s'engager dans une pièce de liaison femelle 76 solidaire du moyeu du volant 77. Une pince 78 permet de fixer cette transmission au plafond de la cabine lorsque le système est au repos, c'est-à-dire lorsque le véhicule et en déplacement routier normal.

La présente invention n'est pas limitée aux formes de réalisation décrites mais peut subir différentes modifications et se présenter sous diverses variantes évidentes pour l'homme de l'art. En particulier, le circuit électronique pourrait comporter des détecteurs analogiques et une sortie numérique agissant directement sur un dispositif d'assistance électromécanique connu en soi.

En outre, le train routier peut comporter un poste de pilotage arrière, comprenant une unité de commande liée au dispositif et agissant sur la transmission et les freins du véhicule, de manière à permettre au conducteur de diriger une manoeuvre de marche arrière depuis l'arrière du véhicule.

Cette variante peut être liée à un équipement de commande à distance portable qui permet de diriger entièrement les manoeuvres de l'extérieur du véhicule.

Ces deux variantes permettent au conducteur de visualiser directement le terrain de manoeuvre et le déplacement du véhicule, sans que son attention soit distraite par la commande de cette manoeuvre.

**Revendications**

1. Dispositif d'asservissement de la direction d'un véhicule articulé comportant un véhicule tracteur (10) et une remorque (11) à roues à essieux (14) fixes ou articulés, et un organe de commande (17) pour donner une consigne de direction à ce dispositif, ce dispositif comportant un premier détecteur (18) pour détecter la position (angle D) des roues directrices du tracteur (10), un second détecteur (21) pour détecter la position (angle S) d'une sellette (15) de la remorque (11) et éventuellement un troisième détecteur (20) pour détecter la position (angle C) entre un timon (12) de la remorque (11) et l'axe du tracteur (10), et comportant un circuit électronique pour fournir au dispositif d'asservissement un signal de commande à la direction des roues avant du tracteur (10) en fonction des informations fournies par les détecteurs et de la consigne de direction donnée par l'organe de commande (17), **caractérisé** en ce que le circuit électronique comporte un calculateur numérique (42) pour le traitement des informations fournies par tout les détecteurs présents qui comporte un quatrième détecteur (16) pour détecter une mesure d'angle (G) entre l'organe de commande (17) et l'axe du tracteur, (10) le traitement des informations par le calculateur numérique (42) étant procédé suivant l'équation de régulation

$$D = K_3G + K_2C - K_1S,$$

D étant une mesure d'angle entre les roues directrices et l'axe du tracteur (10), G étant une mesure d'angle entre l'organe de commande (17) et l'axe du tracteur (10), C étant une mesure d'angle entre le timon (12) de la remorque (11) et l'axe du tracteur (10) et S étant une mesure d'angle entre l'axe et la sellette (15) de la remorque (11), en ajustant les coefficients $K_1$, $K_2$ et $K_3$ de telle manière que la direction donnée par l'organe de commande (17) ne dépasse jamais la limite de braquage maximale.

2. Dispositif selon la revendication 1, dans lequel les détecteurs (30, 31, 32, 33, 34) sont des capteurs analogiques, caractérisé en ce que le circuit électronique comporte un multiplexeur (40) dont chacune des entrées est raccordée à un des détecteurs et un convertisseur analogique/numérique (41) couplé entre le multiplexeur (40) et le calculateur numérique (42).

3. Dipositif selon la revendication 1, dans lequel les détecteurs (30, 31, 32, 33, 34) sont des capteurs numériques, caractérisé en ce que le circuit électronique comporte un multiplexeur (40) dont chacune des entrées est raccordée à un détecteur et dont la sortie est couplée directement au calculateur numérique (42).

4. Dispositif selon la revendication 1, caractérisé en ce qu'il comporte des organes avertisseurs montés dans la cabine du conducteur, ces organes étant liés aux détecteurs pour signaler au conducteur que le véhicule atteint les limites de braquage.

5. Dispositif selon la revendication 1, caractérisé en ce qu'il comporte un dispositif moteur à grand couple de démarrage pour commander le déplacement des roues directrices du véhicule tracteur.

6. Dispositif selon la revendication 1, caractérisé en ce qu'il comporte des moyens de visualisation de la remorque, et/ou du véhicule tracteur montés sur le tableau de bord du véhicule tracteur.

7. Dispositif selon la revendication 1, caracterisé en ce qu'il comporte une caméra fixée à l'arrière du véhicule articulé et un récepteur de contrôle situé dans la cabine du véhicule tracteur.

8. Dispositif selon la revendication 1, caracterisé en ce qu'il comporte deux séries de voyant lumineux (51, 52) de couleurs différentes montés, soit sur le bord droit, soit sur le bord gauche d'au moins un rétroviseur (53) du véhicule tracteur, ces voyants étant agencés pour fournir au conducteur une indication sur le sens dans lequel il doit tourner le volant de la direction du tracteur pour effectuer correctement la manoeuvre ainsi que l'amplitude de la rotation de ce volant.

9. Dispositif selon la revendication 1, caracterisé en ce qu'il comporte des butées mécaniques de sécurité associées à des contacteurs agencés pour fournir au calculateur (42) des informations relatives aux angles de braquage maximal.

10. Dispositif selon la revendication 1, caractérisé en ce qu'il comporte des moyens électroniques agencés pour fournir au calculateur (42) des informations relatives aux angles de braquage maximal.

11. Dispositif selon la revendication 1, caractérisé en ce qu'il comporte une unité de commande agencée pour agir sur la transmission et les freins du véhicule et montée dans un poste de pilotage disposé à l'arrière de ce véhicule.

12. Dispositif selon la revendiation 1, caractérisé en ce qu'il comporte un équipement de commande à distance portable agencé pour permettre la commande de manoeuvres de l'extérieur du véhicule.

13. Dispositif selon la revendication 1, caractérisé en ce que la remorque et/ou le véhicule tracteur est équipé de moyens de codage des caractéristiques dimensionnelles de la remorque, ces moyens étant agencés pour transmettre au calculateur numérique (42) des informations de programmation correspondant à ces caractéristiques dimensionnelles.

14. Dispositif selon la revendication 13, caractérisé en ce que lesdits moyens de codage comportent un connecteur mâle (60) et un connecteur femelle (61) respectivement montés sur la remorque et le véhicule tracteur, le connecteur de la remorque étant codé, et le connecteur du véhicule tracteur étant agencé pour transmettre lesdites informations de programmation au calculateur.

15. Dispositif selon la revendication 13, caractérisé en ce que lesdits moyen de codage comportent une carte codée selon les caractéristiques dimensionnelles de la remorque et un lecteur de carte codée pour transmettre lesdites informations de programmation au calculateur.

16. Dispositif selon la revendication 1, caractérisé en ce qu'il comporte un moyen mécanique escamotable comprenant un moteur électrique (72) et au moins une tige de transmission (74) liée à un arbre flexible 75 portant un manchon de couplage (76) agencé pour coopérer avec une pièce de liaison (77) solidaire du volant (78) pour entraîner ce volant pendant les opérations de manoeuvre commandées par l'organe de commande destiné à donner une consigne de direction.

## Ansprüche

1. Servoeinrichtung für die Lenkung eines Fahrzeugzuges umfassend ein Zugfahrzeug (10) und einen Anhänger (11) mit Rädern auf festen oder gelenkigen Achsen (14) und ein Steuerorgan (17), um dieser Einrichtung eine Richtungsvorgabe zu liefern, wobei diese Einrichtung einen ersten Detektor (18) zum Feststellen der Position (Winkel D) der Führungsräder des Zugfahrzeugs (10), einen zweiten Detektor (21) zum Feststellen der Position (Winkel S) eines Drehschemels (15) des Anhängers (11) und gegebenenfalls einen dritten Detektor (20) zum Feststellen der Position (Winkel C) zwischen einer Deichsel (12) des Anhängers (11) und der Achse des Zugfahrzeugs (10) und einen elektronischen Schaltkreis zum Liefern eines Steuersignals für die Richtung der Vorderräder des Zugfahrzeugs (10) als Funktion der von den Detektoren gelieferten Informationen und der vom Steuerorgan (17) vorgegebenen Richtungsvorgabe an die Servoeinrichtung umfaßt, dadurch **gekennzeichnet**, daß der elektronische Schaltkreis einen numerischen Rechner (42) zur Verarbeitung der durch alle vorhandenen Detektoren gelieferten Informationen umfaßt, die einen vierten Detektor (16) zum Feststellen eines Maßes für den Winkel (G) zwischen dem Steuerorgan (17) und der Achse des Zugafahzeugs (10) umfassen, wobei die Informationsverarbeitung durch den numerischen Rechner (42) gemäß der Regelgleichung

$$D = K_3G + K_2C - K_1S$$

erfolgt, wobei D ein Maß für den Winkel zwischen den Führungsrädern und der Achse des Zugfahrzeugs (10), G ein Maß für dem Winkel zwischen dem Steuerorgan (17) und der Achse des Zugfahrzeugs (10), C ein Maß für den Winkel zwischen der Deichsel (12) des Anhängers (11) und der Achse des Zugfahrzeugs (10) und S ein Maß für den Winkel zwischen der Achse und dem Drehschemel (15) des Anhängers (11) ist, wobei die Koeffizienten $K_1$, $K_2$ und $K_3$ derart angepaßt werden, daß die durch das Steuerorgan (17) vorgegebene Richtung nie den maximalen Grenzeinschlag überschreitet.

2. Einrichtung nach Anspruch 1, bei der die Detektoren (30, 31, 32, 33, 34) Analogaufnehmer sind, dadurch gekennzeichnet, daß der elektronische Schaltkreis einen Multiplexer (40) umfaßt, von dem jeder seiner Eingänge mit einem der Detektoren und einem Analog/Digital-Wandler (41), der zwischen dem Multiplexer (40) und dem numerischen Rechner (42) gekoppelt ist, verbunden ist.

3. Einrichtung nach Anspruch 1, bei der die Detektoren (30, 31, 32, 33, 34) numerische Aufnehmer sind, dadurch gekennzeichnet, daß der elektronische Schaltkreis einen Multiplexer (40) umfaßt, von dem jeder seiner Eingänge mit einem Detektor verbunden und dessen Ausgang direkt mit dem numerischen Rechner (42) gekoppelt ist.

4. Einrichtung nach Anspruch 1, dadurch gekennzeichnet, daß sie in der Fahrerkabine montierte Meldeorgane umfaßt, wobei diese Organe mit den Detektoren verbunden sind, um dem Fahrer zu signalisieren, daß das Fahrzeug die Grenzeinschläge erreicht.

5. Einrichtung nach Anspruch 1, dadurch gekennzeichnet, daß sie eine Motoreinrichtung mit großem Anlaufdrehmoment zum Steuern der Verstellung der Führungsräder des Zugfahrzeugs umfaßt.

6. Einrichtung nach Anspruch 1, dadurch gekennzeichnet, daß sie Mittel zum Sichtbarmachen des Anhängers und/oder des Zugfahrzeugs umfaßt, die am Armaturenbrett des Zugfahrzeugs montiert sind.

7. Einrichtung nach Anspruch 1, dadurch gekennzeichnet, daß sie eine an der Rückseite des Fahrzeugzuges befestigte Kamera und einen Überwachungsempfänger, der in der Kabine des Zugfahrzeugs angeordnet ist, umfaßt.

8. Einrichtung nach Anspruch 1, dadurch gekennzeichnet, daß sie zwei Reihen von Leuchtanzeigen (51, 52) unterschiedlicher Farben umfaßt, die entweder am rechten Rand oder am linken Rand wenigstens eines Rücksichtspiegels (53) des Zugfahrzeugs montiert sind, wobei diese Anzeigen zum Liefern einer Anzeige für den Fahrer bezüglich des Sinns, in dem er das Lenkrad des Zugfahrzeugs drehen muß, um die Betätigung ebenso wie die Amplitude der Drehung dieses Lenkrads korrekt zu bewirken, eingerichtet sind.

9. Einrichtung nach Anspruch 1, dadurch gekennzeichnet, daß sie mechanische Sicherheitsanschläge umfaßt, die Kontaktgebern zugeordnet sind, um dem Rechner (42) Informationen bezüglich der maximalen Einschlagwinkel zu liefern.

10. Einrichtung nach Anspruch 1, dadurch gekennzeichnet, daß sie elektronische Mittel umfaßt, die ausgebildet sind, um dem Rechner (42) Informationen bezüglich der maximalen Einschlagwinkel zu liefern.

11. Einrichtung nach Anspruch 1, dadurch gekennzeichnet, daß sie eine Steuereinheit umfaßt, die ausgebildet ist, um auf die Transmission und die Bremsen des Fahrzeugzuges einzuwirken, und in einem Führersitz, der an der Rückseite dieses Fahrzeugzuges angeordnet ist, montiert ist.

12. Einrichtung nach Anspruch 1, dadurch gekennzeichnet, daß sie eine tragbare Einrichtung zum Fernsteuern umfaßt, die ausgebildet ist, um das Steuern der Manöver von außerhalb des Fahrzeugszuges zu steuern.

13. Einrichtung nach Anspruch 1, dadurch gekennzeichnet, daß der Anhänger und/oder das Zugfahrzeug mit Mitteln zum Kodieren der dimensionellen Eigenschaften des Anhängers ausgerüstet ist, wobei diese Mittel ausgebildet sind, um dem numerischen Rechner (42) Programmierinformationen entsprechend diesen dimensionellen Eigenschaften zu liefern.

14. Einrichtung nach Anspruch 13, dadurch gekennzeichnet, daß die besagten Kodiermittel einen Steckerverbinder (60) und einen Steckdosenverbinder (61) umfassen, die am Anhänger bzw. Zugfahrzeug montiert sind, wobei der Anhängerverbinder kodiert und der Zugfahrzeugverbinder ausgebildet ist, um die besagten Programmierinformationen an den Rechner zu übermitteln.

15. Einrichtung nach Anspruch 13, dadurch gekennzeichnet, daß die besagten Kodiermittel eine entsprechend den dimensionellen Eigenschaften des Anhängers kodierte Karte und einen Kartenleser umfassen, der kodiert ist, um die besagten Programmierinformationen an den Rechner zu übertragen.

16. Einrichtung nach Anspruch 1, dadurch gekennzeichnet, daß sie ein mechanisches zusammenlegbares Mittel umfassend einen Elektromotor (72) und wenigstens eine Transmissionstange (74), die mit einer flexiblen Welle (75) verbunden ist, die eine Kupplungsmuffe (76) aufweist, die ausgebildet ist, um mit einem mit dem Steuerrad (78) fest verbundenen Verbindungsstück (77) zusammenzuarbeiten, zum Antreiben des Steuerrads während der durch das zum Vorgeben einer Richtungsvorgabe bestimmten Steuerorgan gesteuerten Manövrieroperationen umfaßt.

**Claims**

1. A device for controlling the steering of an articulated vehicle comprising a tractor vehicle (10) and a trailer (11) having wheels with fixed or articulated axles (14) and a control member (17) for providing this device with a steering instruction, this device comprising a first detector (18) for detecting the position (angle D) of the drive wheels of the tractor (10), a second detector (21) for detecting the position (angle S) of a fifth wheel (15) of the trailer (11) and possibly a third detector (20) for detecting the position (angle C) of a drawbar (12) of the trailer (11) with respect to the axis of the tractor (10), and comprising an electronic circuit for supplying the control device with a steering control signal for the front wheels of the tractor (10) as a function of the information supplied by the detectors and the steering instruction imparted by the control member (17), characterized in that the electronic circuit comprises a digital computer (42) for the processing of the information supplied by all the detectors present which comprise a fourth detector (16) for detecting an angular measurement (G) between the control member (17) and the axis of the tractor (10), the processing of the information by the digital computer (42) taking place according to the regulation equation :

$$D = K_3 G + K_2 C - K_1 S,$$

in which D is a measurement of the angle between the drive wheels and the axis of the tractor (10), G is a measurement of the angle between the control member (17) and the axis of the tractor (10), C is a measurement of the angle between the drawbar (12) of the trailer (11) and the axis of the tractor (10) and S is a measurement of the angle between the axis and the fifth wheel (15) of the trailer (11), adjusting the coefficients $K_1$, $K_2$ and $K_3$ in such a way that the steering imparted by the control member (17) never exceeds the maximum locking limit.

2. A device as claimed in claim 1, in which the detectors (30, 31, 32, 33, 34) are analog sensors, characterized in that the electronic circuit comprises a multiplexer (40) each of whose inputs is connected to one of the detectors and an analog-to-digital converter (41) coupled between this multiplexer (40) and the digital computer (42).

3. A device as claimed in claim 1, in which the detectors (30, 31, 32, 33, 34) are digital sensors, characterized in that the electronic circuit comprises a multiplexer (40) each of whose inputs is connected to a detector and whose output is directly connected to the digital computer (42).

4. A device as claimed in claim 1, characterized in that it comprises indicator members mounted in the driver's cabin, these members being connected to the detectors to inform the driver that the vehicle is reaching the locking limits.

5. A device as claimed in claim 1, characterized in that it comprises a motor device with a large starting torque in order to control the movement of the drive wheels of the tractor vehicle.

6. A device as claimed in claim 1, characterized in that it comprises trailer and/or tractor vehicle display means mounted on the dashboard of the tractor vehicle.

7. A device as claimed in claim 1, characterized in that it comprises a video camera secured to the rear of the articulated vehicle and a monitoring receiver located in the cabin of the tractor vehicle.

8. A device as claimed in claim 1, characterized in that it comprises two sets of indicator lights (51, 52) of different colour mounted on either the right-hand or the left-hand edge of at least one rear-view mirror (53) of the tractor vehicle, these lights being adapted to provide the driver with information on the direction in which he has to turn the tractor's steering wheel so as correctly to perform the manoeuvre, as well as the amplitude of rotation of this steering wheel.

9. A device as claimed in claim 1, characterized in that it comprises mechanical safety stops associated with contactors adapted to provide the computer (42) with information on the maximum locking angles.

10. A device as claimed in claim 1, characterized in that it comprises electronic means adapted to supply the computer (42) with information on the maximum locking angles.

11. A device as claimed in claim 1, characterized in that it comprises a control unit arranged to act on the transmission and the brakes of the vehicle and mounted in a driving position disposed at the rear of this vehicle.

12. A device as claimed in claim 1, characterized in that it comprises a portable remote control device adapted to allow the manoeuvres to be controlled from outside the vehicle.

13. A device as claimed in claim 1, characterized in that the trailer and/or the tractor vehicle is equipped with means for encoding the dimensional characteristics of the trailer, these means being adapted to supply the digital computer (42) with programming information corresponding to these dimensional characteristics

14. A device as claimed in claim 13, characterized in that these encoding means comprise a male (60) and a female (61) connector mounted on the trailer and the tractor vehicle respectively, the trailer connector being encoded and the tractor vehicle connector being adapted to transmit this programming information to the computer.

15. A device as claimed in claim 13, characterized in that these encoding means comprise a card encoded with the dimensional characteristics of the trailer and an encoded card reader for transmitting this programming information to the computer.

16. A device as claimed in claim 1, characterized in that it comprises a retractable mechanical means comprising an electric motor (72) and at least one transmission rod (74) connected to a flexible shaft (75) bearing a coupling sleeve (76) adapted to cooperate with a connection member (77) rigid with the steering wheel (78) so as to move this wheel during the manoeuvres controlled by the control member designed to impart a steering instruction.

FIG. 1

FIG. 2

FIG. 3

FIG. 4

FIG. 5

FIG. 7

FIG. 6